# EUROPÄISCHE PATENTSCHRIFT

(11) **EP 2 711 122 B1**
(45) Veröffentlichungstag und Bekanntmachung des Hinweises auf die Patenterteilung: **16.05.2018**
(21) Anmeldenummer: 13184895.4
(22) Anmeldetag: 18.09.2013
(51) Int. Cl.: B23P 9/02, B24B 39/04, C21D 7/08, F01D 5/28, F01D 5/00

(54) **Walzwerkzeugvorrichtung**
Roller tool device
Dispositif d'outil de laminage

(30) Priorität: 20.09.2012 DE 102012018604
(43) Veröffentlichungstag der Anmeldung: 26.03.2014
(73) Patentinhaber: Rolls-Royce Deutschland Ltd & Co KG, 15827 Blankenfelde-Mahlow (DE)
(72) Erfinder: Feldmann, Goetz, 61440 Oberursel (DE)
(74) Vertreter: Kronthaler, Wolfgang N.K.

(56) Entgegenhaltungen:
- WO-A1-2012/140103
- WO-A1-2012/140104
- WO-A2-2007/055864
- US-A1- 2007 234 772
- US-A1- 2012 180 278

## Beschreibung

Die Erfindung betrifft eine Walzwerkzeugvorrichtung gemäß der im Oberbegriff des Patentanspruches 1 näher definierten Art. Eine solche Walzwerkzeugvorrichtung ist aus der US 2007/234772 bekannt. Zum Festwalzen von insbesondere Schaufelelementen eines Rotorbereiches eines Strahltriebwerkes vorgesehene Walzwerkzeugvorrichtungen sind aus der Praxis bekannt. Diese weisen üblicherweise einen Werkzeugträger auf, mit dem zwei Zangenkörper drehbar verbunden sind. Die Zangenkörper sind jeweils mit einem Wälzbereich ausgeführt, wobei ein Abstand zwischen den Wälzbereichen in Abhängigkeit einer Drehbewegung der Zangenkörper gegenüber dem Werkzeugträger variierbar ist. Mittels derartiger Walzwerkzeugvorrichtungen bzw. mit solchen Zangenwerkzeugen besteht die Möglichkeit, Schaufelelemente bzw. dünnwandige Bauteile gleichzeitig von beiden Seiten des dünnwandigen Bauteiles zu bearbeiten und dabei glatt- bzw. festzuwalzen.

Schaufelelemente werden über die Walzwerkzeugvorrichtungen durch einen axialen Eingriff ausgehend von der Schaufelvorderkante über eine in Strömungsrichtung liegende Bearbeitung über Festwalzen nachverfestigt, um eine Beständigkeit der Schaufelelemente gegenüber Fremdkörperschädigungen und auch Schwingungsbelastungen zu erhöhen.

Die aus der Praxis bekannten Walzwerkzeugvorrichtungen weisen jedoch den Nachteil auf, dass es bei Beginn eines Bearbeitungsvorgangs zu einer Deformierung einer Schaufelvorderkante kommen kann, wenn eine auf die Schaufelvorderkante wirkende Kraft bei einer Einfahrbewegung der Walzwerkzeugvorrichtung zu groß ist.

Der vorliegenden Erfindung liegt daher die Aufgabe zugrunde, eine Walzwerkzeugvorrichtung zur Verfügung zu stellen, mittels welcher eine Deformierung eines zu bearbeitenden Bauteils insbesondere bei einer Einfahrbewegung der Walzwerkzeugvorrichtung sicher verhindert ist.

Erfindungsgemäß wird diese Aufgabe mit einer Walzwerkzeugvorrichtung mit den Merkmalen des Patentanspruches 1 gelöst.

Die erfindungsgemäße Walzwerkzeugvorrichtung zum Festwalzen von insbesondere Schaufelelementen eines Rotorbereiches eines Strahltriebwerkes weist einen Werkzeugträger auf, mit dem zwei Zangenkörper drehbar verbunden sind. Die Zangenkörper sind jeweils mit einem Wälzbereich ausgeführt und ein Abstand zwischen den Walzbereichen ist in Abhängigkeit einer Drehbewegung der Zangenkörper variierbar. Erfindungsgemäß ist vorgesehen, dass eine separate Abstandshalteeinrichtung vorgesehen ist, mittels welcher ein minimaler Abstand der Wälzbereiche zueinander festlegbar ist.

Die erfindungsgemäße Walzwerkzeugvorrichtung hat den Vorteil, dass durch die Definition eines minimalen Abstands zwischen den Wälzbereichen über die Abstandshalteeinrichtung eine Deformierung einer Schaufelvorderkante bei der Bearbeitung von Rotorbereichen sicher vermieden wird und verhindert ist, dass in unerwünschtem Umfang Kräfte in den Bereich der Schaufelvorderkante eingeleitet werden. Dies resultiert daraus, dass durch eine entsprechende Wahl des minimalen Abstands ein vorderster, einer Einführbewegung der Walzwerkzeugvorrichtung zugewandter Bereich der Schaufelvorderkanten nicht bzw. nur geringfügig bearbeitet und somit nicht verformt und im schlimmsten Fall beschädigt wird. Weiterhin sind mit der erfindungsgemäßen Walzwerkzeugvorrichtung eine besonders gleichmäßige Induzierung von Eigenspannungen, sowie eine Verminderung eines dadurch bedingten spannungsinduzierten Verzugs erzielbar.

Eine weitere vorteilhafte Wirkung der erfindungsgemäßen Walzwerkzeugvorrichtung ist, dass durch das Vorsehen der Abstandshalteeinrichtung auf einfache Weise vermieden werden kann, dass die Wälzbereiche der Zangenkörper vor einem Eingriff in das Bauteil miteinander in Kontakt treten bzw. dass eine zwischen den Wälzbereichen aufgrund von Toleranzen wirkende Kraft einen Grenzwert nicht übersteigt, so dass die Wälzbereiche nicht beschädigt werden.

Die Abstandshalteeinrichtung stellt ein separates Bauteil der Walzwerkzeugvorrichtung dar, welches entsprechend unabhängig von weiteren Funktionen angeordnet und dimensioniert werden kann.

Bei einer einfachen Ausführung einer erfindungsgemäßen Walzwerkzeugvorrichtung ist ein Stangenkörper der Abstandshalteeinrichtung einenends fest mit einem Zangenkörper und anderenends über einen Anschlag lose mit dem anderen Zangenkörper verbunden. Alternativ hierzu kann der Stangenkörper der Abstandshalteeinrichtung auch mit einer zur Kraftbeaufschlagung vorgesehenen Antriebseinrichtung gekoppelt sein und deren Bewegung zur Einstellung des minimalen Abstands der Wälzbereiche begrenzen. Ein Ende des Stangenkörpers ist dabei wiederum fest mit der Antriebseinrichtung und ein anderes Ende in axialer Richtung des Stangenkörpers beweglich mit der Abstandshalteeinrichtung verbunden.

Die Abstandshalteeinrichtung ist bei einer konstruktiv einfachen Ausführung der Erfindung mit einer Stange ausgebildet, welche zur Bildung des Anschlags durch ein fest mit dem Zangenkörper bzw. der Antriebseinrichtung verbundenes Halteelement, beispielsweise durch eine Bohrung des Halteelements, geführt ist und ein Anschlagelement aufweist, welches einen minimalen Abstand der Wälzbereiche durch ein Zusammenwirken mit dem Halteelement bildet.

Um die Walzwerkzeugvorrichtung zur Bearbeitung von verschiedenen Bauteilen mit unterschiedlichen geometrischen Ausführungen einsetzen zu können, ist der minimale Abstand der Wälzbereiche bei einer vorteilhaften Ausführung der Walzwerkzeugvorrichtung mit der Abstandshalteeinrichtung variierbar.

Der minimale Abstand der Wälzbereiche kann mechanisch, hydraulisch, pneumatisch, elektrisch, magnetisch, thermisch und/oder chemisch einstellbar sein.

Bei einer besonders einfach ausgeführten Walzwerkzeugvorrichtung nach der Erfindung ist der minimale Abstand der Wälzbereiche mittels einer Stellschraube der Abstandshalteeinrichtung variierbar.

Die Abstandshalteeinrichtung kann auf einer den Wälzbereichen abgewandten oder auf einer den Wälzbereichen zugewandten Seite eines gemeinsamen Drehlagers der Zangenkörper gegenüber dem Werkzeugträger angeordnet sein. Je größer ein Abstand der Abstandshalteeinrichtung von dem Drehlager ist, desto genauer ist eine Einstellung des Minimalabstands mit der Abstandshalteeinrichtung vornehmbar. Bei einer Anordnung der Abstandshalteeinrichtung in der Nähe des Drehlagers ist eine Einstellung des Minimalabstands mit geringen Verstellwegen vornehmbar, so dass der minimale Abstand beispielsweise über eine Piezoregelung einstellbar ist.

Um eine Programmierung und eine spätere Implementierung der Fertigungsprogramme in Mehrachsbearbeitungszentren im Vergleich zu aus der Praxis bekannten Walzwerkzeugvorrichtungen zu vereinfachen, verläuft eine Achse der Trägerspindel bei der erfindungsgemäßen Walzwerkzeugvorrichtung in mit dem Werkzeugträger verbundenem Zustand zwischen den Wälzbereichen durch einen bei einem Abstand zwischen den Wälzbereichen gleich Null vorliegenden Berührungspunkt zwischen den Wälzbereichen hindurch, womit die Achse der Trägerspindel und eine Berührungslinie zwischen der Walzwerkzeugvorrichtung und einem zu bearbeitenden Bauteil im Wesentlichen deckungsgleich sind. Damit sind insbesondere während der Bearbeitung von Freiformflächen eines Werkstückes keine wechselnden Lageveränderungen und daraus resultierende sich ständig ändernde Vektoren bei der Programmierung des Fertigungsverlaufes zu berücksichtigen.

Bei einer vorteilhaften Ausführungsform der erfindungsgemäßen Walzwerkzeugvorrichtung sind die Zangenkörper um ein gemeinsames Drehlager gegenüber dem Werkzeugträger verdrehbar ausgeführt, wobei ein Abstand zwischen den Wälzbereichen während einer Drehbewegung der Zangenkörper um das gemeinsame Drehlager gleich bleibt. Damit ist gewährleistet, dass bei Anlage der Wälzbereiche an einem vorzugsweise dünnwandigen Bauteil, wie einem Schaufelelement eines Rotorbereiches eines Strahltriebwerkes, eine durch die Anlage der Wälzbereiche bedingte Verformung des zu bearbeitenden Bauteiles vermieden wird. Zusätzlich sind durch die gemeinsame Verdrehbarkeit der Zangenkörper und damit auch der Wälzbereiche Oberflächenbereiche einer Freiflächenform für die Wälzbereiche anfahrbar, die ohne die gemeinsame Drehbarkeit der Zangenkörper nicht erreichbar wären.

Stehen die Zangenkörper über Kolbenelemente mit dem Werkzeugträger in Wirkverbindung, mittels welchen die Zangenkörper gegenüber dem Werkzeugträger um das Drehlager in eine in Bezug auf den Werkzeugträger definierte Nulllage verdrehbar sind, ist die Walzwerkzeugvorrichtung mit geringem Steuer- und Regelaufwand betreibbar, da die Nulllage der Zangenkörper in Bezug auf den Werkzeugträger jeweils automatisiert eingelegt wird.

Bei einer ebenfalls mit geringem Steuer- und Regelaufwand betreibbaren Ausführungsform der erfindungsgemäßen Walzwerkzeugvorrichtung sind die Zangenkörper über die Antriebseinrichtung miteinander gekoppelt und der Abstand zwischen den Wälzbereichen in Abhängigkeit einer antriebseinrichtungsseitigen Drehbewegung der Zangenkörper zueinander reduzierbar.

Bei einer konstruktiv einfachen und kostengünstigen Ausführungsform der erfindungsgemäßen Walzwerkzeugvorrichtung ist die Antriebseinrichtung als eine einfach wirkende Kolben-Zylinder-Einheit ausgebildet.

Um einen Einsatzbereich der erfindungsgemäßen Walzwerkzeugvorrichtung zu vergrößern, kann die Antriebseinrichtung, insbesondere ein Kolbenelement der Antriebseinrichtung, austauschbar sein. Hierdurch kann für den jeweiligen Anwendungsfall eine von der Antriebseinrichtung auf das jeweilige Bauteil wirkende Krafteinwirkung optimal auf das jeweils zu bearbeitende Bauteil abgestimmt werden oder auch ein schadhaftes Kolbenelement durch ein neues Kolbenelement ersetzt werden.

Ist den Zangenkörpern eine Rückstelleinrichtung zugeordnet, über die ein Abstand zwischen den Wälzbereichen durch rückstellungseinrichtungsseitiges Drehen der Zangenkörper zueinander in Richtung eines maximalen Wertes veränderbar ist, ist der Eingriff zwischen den Wälzbereichen der Walzwerkzeugvorrichtung und dem jeweils zu bearbeitenden Bauteil in gewünschtem Umfang aufhebbar.

Sind die Wälzbereiche mit den Zangenkörpern über Adapterelemente verbindbar, sind über die Walzwerkzeugvorrichtung vorzugsweise verschiedene radiale Eingriffstiefen durch unterschiedlich ausgeführte Adapterelemente und auch verschieden hohe Wälzkräfte für das jeweils zu bearbeitende Bauteil mit geringem konstruktiven Aufwand auf kostengünstige Art und Weise darstellbar.

Die Adapterelemente sind vorzugsweise austauschbar mit den Zangenkörpern verbindbar, so dass wiederum für den jeweiligen Anwendungsfall optimierte Adapterelemente mit den Zangenkörpern verbunden werden können. Insbesondere wenn sowohl die Adapterelemente als auch die Antriebseinrichtung, insbesondere ein Kolbenelement der Antriebseinrichtung, austauschbar sind, kann für den jeweiligen Anwendungsfall eine optimale Kombination zur Erzeugung der erforderlichen Kräfte in den Wälzbereichen erzielt werden.

Um eine Bearbeitung auch in schwer zugänglichen Bereichen von Schaufelelementen zu ermöglichen, können die Zangenkörper, insbesondere die Adapterelemente im Bereich der Wälzbereiche jeweils mit einem Teil ausgebildet sein, wobei Hauptachsen der Teile eine Erstreckungskomponente in Richtung einer Drehachse des Drehlagers aufweisen. Hierdurch sind auch komplex geformte Bauteile, insbesondere Schaufelelemente von Rotorbereichen von Strahltriebwerken oder Bereiche von diesen Bauteilen festwalzbar, welche mit herkömmlichen Walzwerkzeugvorrichtungen nicht bearbeitbar sind. Dies resultiert daraus, dass durch die eine Erstreckungskomponente in Richtung der Drehachse des Drehlagers aufweisenden Teile der Zangenkörper eine Einführung der Walzwerkzeugvorrichtung in Schaufelelemente des Rotorbereichs einfach möglich ist. Eine Neigung der Teile in Richtung der Drehachse ist insbesondere auf eine Einführrichtung der Walzwerkzeugvorrichtung in die Schaufelelemente abgestimmt und derart gewählt, dass die Einführung der Walzwerkzeugvorrichtung einfach möglich ist. Die Teile sind im Bereich der Wälzbereiche insbesondere stab-, zylinder-, röhrenförmig oder dergleichen ausgebildet, wobei eine Hauptachse bei symmetrisch ausgebildeten Teilen einer Mittelachse der Teile entspricht.

Besonders vorteilhaft ist der Einsatz der erfindungsgemäßen Walzwerkzeugvorrichtung bei der Bearbeitung von mehrstufigen Rotorbereichen in Bliskbauweise, bei denen auch Bereiche von Schaufelelementen, insbesondere Schaufelvorderkanten und Schaufelhinterkanten, einer zweiten, dritten oder folgenden Stufe des Rotorbereichs bearbeitet werden sollen. Der Teil der Zangenkörper kann eine gewünschte Länge aufweisen und entweder geradlinig oder gebogen ausgeführt sein, wobei die jeweilige Form und Größe des weiteren Teils in Abhängigkeit von dem jeweils zu bearbeitenden Bauteil gewählt werden kann.

Bei einer vorteilhaften Ausführung einer erfindungsgemäßen Walzwerkzeugvorrichtung erstrecken sich die Teile im Wesentlichen in Richtung der Drehachse des Drehlagers. Hierdurch ist eine Einführung der Walzwerkzeugvorrichtung in axialer Richtung des Rotorbereichs zur Bearbeitung von Schaufelvorderkanten und Schaufelhinterkanten der Schaufelelemente vorteilhafterweie möglich, ohne dass ein im Bereich der Wälzbereiche in Längsrichtung bzw. in Erstreckungsrichtung der Zangenkörper erstreckender Teil der Zangenkörper eine Einführung der Walzwerkzeugvorrichtung in die Schaufelelemente behindern könnte. Der Teil der Zangenkörper kann auch gebogen ausgeführt sein.

Bei einer konstruktiv einfachen Ausführung einer erfindungsgemäßen Walzwerkzeugvorrichtung weisen die Zangenkörper bzw. die Adapterelemente einen weiteren Teil auf, welcher in Richtung der Drehachse des Drehlagers beabstandet zu durch einen Bearbeitungspunkt der Wälzbereiche verlaufenden, parallel zu einer Achse einer Trägerspindel in mit dem Werkzeugträger verbundenem Zustand verlaufenden Achsen angeordnet ist. Durch die zu der Achse der Trägerspindel versetzte Anordnung des weiteren Teils der Zangenkörper bzw. der Adapterelemente wird eine axiale Einführbewegung der Walzwerkzeugvorrichtung in ein zu bearbeitendes Bauteil nicht behindert. Der weitere Teil der Zangenkörper kann einen in Abhängigkeit des zu bearbeitenden Bauteils erforderlichen Abstand zu der Achse der Trägerspindel aufweisen.

Bei einer einfach herstellbaren Walzwerkzeugvorrichtung kann der weitere Teil der Zangenkörper insbesondere im Wesentlichen parallel zu der Achse der Trägerspindel verlaufen.

Durch eine beispielsweise abgewinkelte oder U-förmige Ausführung der Zangenkörper bzw. Adapterelemente wird ein Eingriff zur axialen Bearbeitung einer Schaufelvorder- und einer Schaufelhinterkante insbesondere von mehrstufig ausgeführten Rotorbereichen in Bliskbauweise auf einfache Weise ermöglicht. Zudem ist mit einer derartigen Ausführung der Adapterelemente bei entsprechender Anordnung der Wälzbereiche eine einfache Programmierung erzielbar.

Umfassen die Wälzbereiche jeweils ein Kugelelement, liegt zwischen den Wälzbereichen und dem jeweils zu bearbeitenden Bauteil jeweils eine Punktberührung vor, über die bei vergleichsweise geringen Kräften eine hohe Flächenpressung erzwingbar und damit eine hohe Eigenspannung in oberflächennahe Bereiche des zu bearbeitenden Bauteiles bei gleichzeitig hoher Oberflächengüte einbringbar sind. Eine austauschbare Anordnung der Kugelelemente an den Wälzbereichen ermöglicht den einfachen Wechsel der Kugelelemente, wenn diese beispielsweise verschlissen sind.

Sowohl die in den Patentansprüchen angegebenen Merkmale als auch die in den nachfolgenden Ausführungsbeispielen der erfindungsgemäßen Walzwerkzeugvorrichtung angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen des erfindungsgemäßen Gegenstandes ergeben sich aus den Patentansprüchen und den nachfolgend unter Bezugnahme auf die Zeichnung prinzipmäßig beschriebenen Ausführungsbeispielen.

Es zeigt:
- Fig. 1: eine stark schematisierte Längsschnittansicht eines Strahltriebwerks, das mit einem einstückigen Rotorbereich ausgeführt ist;
- Fig. 2: eine vergrößerte Einzeldarstellung eines Schaufelelementes des einstückigen Rotorbereiches gemäß Fig. 1;
- Fig. 3: eine Seitenansicht einer Walzwerkzeugvorrichtung;
- Fig. 4: eine stark schematisierte Ansicht einer alternativ ausgebildeten Walzwerkzeugvorrichtung; und
- Fig. 5: eine stark schematisierte Darstellung der Walzwerkzeugvorrichtung der Fig. 4 in einer um 90° verdreht gezeigten Ansicht.

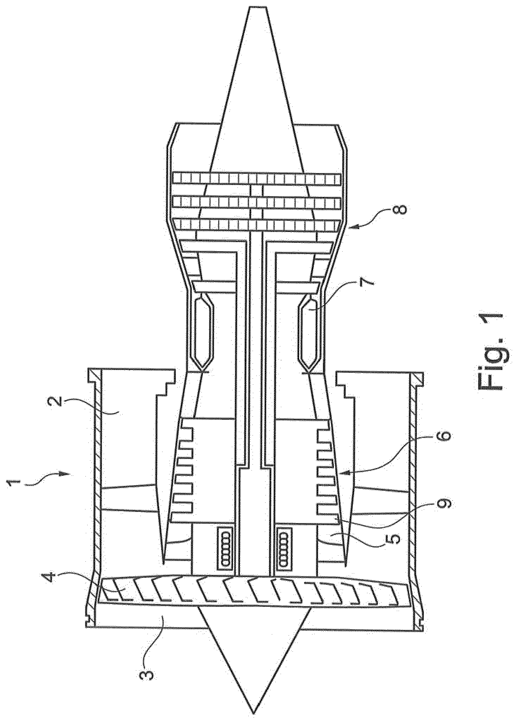

Fig. 1 zeigt eine Längsschnittansicht eines Strahltriebwerkes 1, das mit einem Nebenstromkanal 2 ausgeführt ist. Des Weiteren ist das Strahltriebwerk 1 mit einem Einlaufbereich 3 ausgebildet, an den sich stromab ein Bläser 4 in an sich bekannter Art und Weise anschließt. Wiederum stromab des Bläsers 4 teilt sich der Fluidstrom im Strahltriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7 und einer Turbineneinrichtung 8 ausgeführt ist.

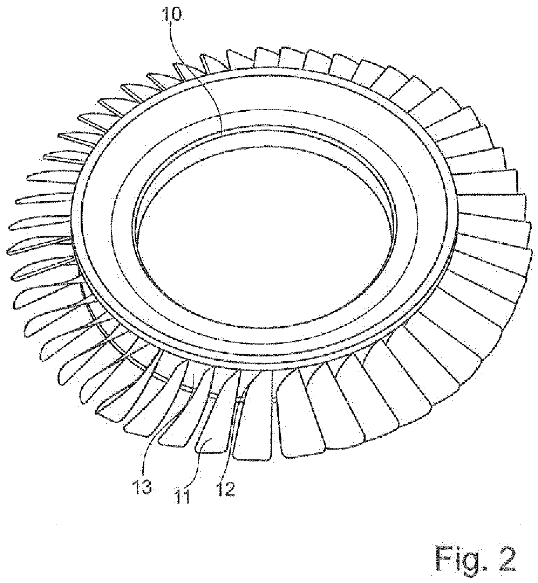

Eine vergrößerte Einzelansicht eines einstückigen Rotorbereiches 9 der Verdichtereinrichtung 6 ist in Fig. 2 dargestellt. Der einstückige Rotorbereich 9 umfasst einen ringförmigen Grundkörper 10 und mehrere über den Umfang verteilte Schaufelelemente 11, die sich im Wesentlichen vom Grundkörper 10 radial erstrecken.

Bei dem einstückigen Rotorbereich 9 handelt es sich um eine so genannte Blisk, die eine integrale Rotor-Konstruktion ist. Der Begriff Blisk setzt sich aus den englischen Worten "Blade" für Schaufel und "Disk" für Scheibe zusammen. Die Scheibe bzw. der ringförmige Grundkörper 10 sowie die Schaufelelemente 11 sind aus einem Stück gefertigt, womit bei mehrstückig ausgeführten Rotorbereichen vorgesehene Schaufelfüße und Scheibennuten entfallen. Der einstückige Rotorbereich 9 ist gegenüber konventionell beschaufelten Verdichterrotoren durch eine erheblich geringere Teilezahl gekennzeichnet und die Scheibenform des ringförmigen Grundkörpers 10 ist für eine geringere Randlast ausgelegt. Dies führt dazu, dass das Gewicht des einstückigen Rotorbereiches 9 in Verbindung mit dem Einsatz leichter Werkstoffe um bis zu 50 % gegenüber herkömmlichen Rotorbereichen reduziert ist. Die Höhe der Gewichtsreduzierung ist dabei jeweils abhängig von der Geometrie der Verdichtereinrichtung 6.

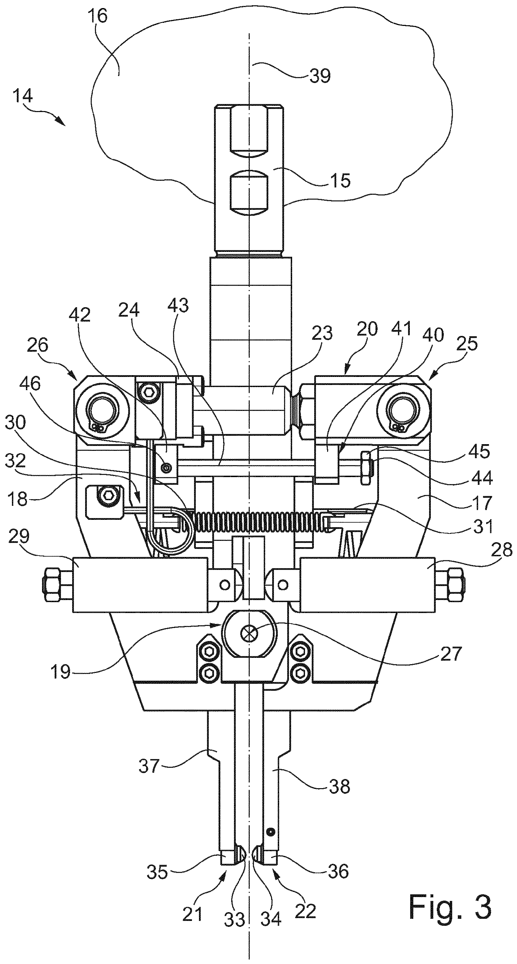

Eine gegenüber Fremdkörperschäden und auch Schwingungsbelastungen bei gleichzeitig geringem Eigengewicht ausgeführte Verdichtereinrichtung 6 bzw. ein entsprechender einstückiger Rotorbereich 9 ist geschaffen, wenn in die Schaufelelemente 11 über eine jeweils radial zwischen die Schaufelelemente 11 eingreifende und in Fig. 3 näher gezeigte Walzwerkzeugvorrichtung 14 bzw. ein Walzwerkzeug durch Festwalzen in oberflächennahen Bereichen Eigenspannungen eingebracht werden, wobei ein Oberflächenbereich eines jeden Schaufelelements, insbesondere jeweils die gesamte Oberfläche eines jeden Schaufelelementes 11 festgewalzt wird. Zusätzlich können auch Übergangsbereiche 12 bzw. Fillets zwischen den Oberflächen der Schaufelelemente 11 und einer Oberfläche 13 des Grundkörpers 10 zwischen den Schaufelelementen 11 mittels eines so genannten und in der Zeichnung nicht näher dargestellten Einfingerwalzwerkzeuges festgewalzt werden. Des Weiteren wird auch die Oberfläche 13 bzw. der Annulus des Grundkörpers 10 zwischen den Schaufelelementen 11 bevorzugt mittels eines Einzelfingerwalzwerkzeuges festgewalzt.

Über das Festwalzen der Oberflächen der Längsseiten und der Kanten der Schaufelelemente 11, der Übergangsbereiche 12 und der Oberfläche 13 des Grundkörpers 10 werden jeweils oberflächennahe Bereiche des einstückigen Rotorbereiches 9 durch Erhöhen der Versetzungsdichte verfestigt und die Randschicht des Rotorbereiches 9 gehärtet. Die Härtung der Randschicht verringert das Risiko von Anrissen, die aus einer Fremdkörperschädigung sowie aus Schwingungsbelastungen resultieren. Darüber hinaus führen die ins Material durch das Festwalzen eingebrachten Druckeigenspannungen im Bereich des Rotorbereiches 9 dazu, dass diese nach Bildung eines Risses einem Rissfortschritt entgegenwirken und somit einen positiven Effekt hinsichtlich der Dauerschwingfestigkeit und damit bezüglich der Lebensdauer des Strahltriebwerkes 1 haben.

Der einstückige Rotorbereich 9 weist durch den Festwalzprozess eine hohe Oberflächengüte mit einer geringen Oberflächenrauheit auf, die einen positiven Effekt auf die aerodynamische Güte der Schaufelelemente 11 sowie des gesamten Rotorbereiches 9 ohne das Erfordernis eines weiteren sich an den Verfestigungsprozess anschließenden Prozessschrittes zur Glättung der Oberfläche hat.

In Fig. 3 ist eine Seitenansicht eines Walzwerkzeuges 14 zum Festwalzen der Längsseiten bzw. der gesamten Oberfläche der Schaufelelemente 11 des Rotorbereiches 9 gezeigt. Das Walzwerkzeug 14 umfasst einen Werkzeugträger 15, der mit einer Trägerspindel 16 einer Werkzeugmaschine in dargestelltem Umfang verbindbar ist. Mit dem Werkzeugträger 15 sind zwei Zangenkörper 17, 18 des Walzwerkzeuges 14 im Bereich eines Drehlagers 19 drehbar verbunden, wobei die Zangenkörper 17, 18 über eine vorliegend als einfach wirkende Kolben-Zylinder-Einheit ausgeführte Antriebseinrichtung 20 gekoppelt sind und ein Abstand zwischen Wälzbereichen 21, 22 in Abhängigkeit einer antriebseinrichtungsseitigen Drehbewegung der Zangenkörper 17 und 18 um das Drehlager 19 reduziert wird.

Hierfür wird die Antriebseinrichtung 20 mit Hydraulikdruck beaufschlagt und ein Kolbenelement 23 aufgrund des anliegenden Hydraulikdrucks aus einem Zylinderelement 24 der Antriebseinrichtung 20 heraus verfahren, wobei bei einer solchen Betriebszustandsänderung der Antriebseinrichtung 20 ein Abstand zwischen den Wälzbereichen 21 und 22 abgewandten Enden 25 und 26 der Zangenkörper 17 und 18 vergrößert wird, während der Abstand zwischen den Wälzbereichen 21 und 22 entsprechend den geometrischen Gegebenheiten in Abhängigkeit der Drehbewegung der Zangenkörper 17 und 18 um das Drehlager 19 herum verringert wird. Die Zangenkörper 17 und 18 sind im Bereich ihrer Enden 25 und 26 jeweils drehbar mit der Antriebseinrichtung 20 verbunden.

Zusätzlich sind die beiden Zangenkörper 17 und 18 um das Drehlager 19 herum um eine in Bezug auf die Zeichenebene in Hochrichtung ausgerichtete Drehachse 27 zusätzlich drehbar am Werkzeugträger 15 befestigt, um bei Anlage der Wälzbereiche 21 und 22 an einem Schaufelelement 11 die Zangenkörper 17 und 18 verschwenken zu können und eine durch die Anlage der Wälzbereiche 21 und 22 am Schaufelelement bedingte Verformung der Schaufelelemente 11 jeweils zu vermeiden. Während der gemeinsamen Verdrehung der Zangenkörper 17 und 18 um das Drehlager 19 gegenüber dem Werkzeugträger 15 bleibt ein Abstand zwischen den Wälzbereichen 21 und 22 gleich. Des Weiteren ist durch die gemeinsame Verdrehbarkeit der beiden Zangenkörper 17 und 18 um das Drehlager 19 auch gewährleistet, dass die jeweils ein Schaufelprofil aufweisenden Schaufelelemente 11 über ihre gesamte Oberfläche mittels des Walzwerkzeuges 14 festwalzbar sind.

Über Kolbenelemente 28 und 29 stehen die Zangenkörper 17 und 18 mit dem Werkzeugträger 15 in Wirkverbindung, wobei die Zangenkörper 17 und 18 von den Kolbenelementen 28 und 29 gegenüber dem Werkzeugträger 15 um das Drehlager 19 in eine in Bezug auf den Werkzeugträger 15 und in Fig. 3 dargestellte definierte Nulllage zurückgestellt werden, wenn eine die Zangenkörper 17 und 18 gemeinsam um das Drehlager 19 verdrehende Drehkraft im Wesentlichen gleich Null ist.

Über eine den Zangenkörpern 17 und 18 zugeordnete und vorliegend zwei Federeinrichtungen 30 und 31 umfassende Rückstelleinrichtung 32 ist ein Abstand zwischen den Wälzbereichen 21 und 22 durch rückstelleinrichtungsseitiges Drehen der Zangenkörper 17 und 18 in Richtung eines maximalen Wertes veränderbar.

Die Wälzbereiche 21 und 22 umfassen vorliegend jeweils ein Kugelelement 33, 34, die jeweils in Haltebereichen 35, 36 lösbar und somit austauschbar aufgenommen sind und in an sich bekannter Art und Weise mit hydraulischem Druck beaufschlagbar sind, um die Schaufelelemente 11 mit der jeweils erforderlichen Wälzkraft über die Kugelelemente 33 und 34 beaufschlagen zu können. Die Haltebereiche 35 und 36 sind vorliegend in mit den Zangenkörpern 17 und 18 fest über Verschraubungen verbundenen und wenigstens annähernd fingerartig ausgeführte Adapterelemente 37 und 38 eingeschoben und vorzugsweise über Madenschrauben mit diesen verschraubt.

Die Adapterelemente 37 und 38 sind jeweils wechselbar mit den Zangenkörpern 17, 18 verbunden, womit über das Walzwerkzeug 14 je nach Form der Adapterelemente 37, 38 unterschiedliche Eingriffstiefen in radialer und/oder axialer Richtung zwischen den Schaufelelementen 11 realisierbar sind. Zusätzlich sind auch hinsichtlich der übertragbaren Druck- bzw. Wälzkraft ausgelegte Adapterelemente 37 und 38 mit den Zangenkörpern 17 und 18 verbindbar, wobei dünnere Adapterelemente in schmälere Bereiche zwischen den Schaufelelementen 11 einführbar sind. Dabei werden dünnere Schaufelelemente 11 mit schlankeren Adapterelementen 37 und 38 auch mit geringeren Walz- bzw. Druckkräften beaufschlagt, da die Adapterelemente 37 und 38 dann eine gewisse Elastizität aufweisen und die maximale Wälzkraft durch die Elastizität der Adapterelemente 37 und 38 begrenzt ist.

Eine komplette Durchfestigung der Schaufelelemente 11 ist während des Festwalzens durch Begrenzung der maximalen Walzkraft vermeidbar, da eine zu hohe Druckbeanspruchung während des Wälzvorganges im mittleren Bereich der Schaufelelemente 11 ein Druckspannungsmaximum erzeugt, welches eine Rissbildung von innen heraus bei Schwingungsbelastungen begünstigt. Dies ist jedoch aufgrund einer Verschlechterung einer Lebensdauer der Schaufelelemente 11 nicht erwünscht.

Die während des Festwalzens jeweils in den Rotorbereich eingebrachte Wälzkraft ist über eine in der Zeichnung nicht näher dargestellte Druckregelungseinheit in gewünschtem Umfang an jeder Stelle eines Schaufelelementes 11 und auch in den Übergangsbereichen 12 sowie der restlichen Oberfläche 13 des Grundkörpers 10 durch Regeln des an den Wälzbereichen 21, 22 anliegenden hydraulischen Drucks variierbar, um den Rotorbereich 9 in gewünschtem Umfang durch Erzeugen der an jeder Stelle des Rotorbereiches 9 nötigen optimalen Druckeigenspannungen verfestigen zu können und eine Verbesserung hinsichtlich der Haltbarkeit der Schaufeln zu erzielen.

Um beispielsweise eine einem Festwalzvorgang mittels des Walzwerkzeuges 14 vorgeschaltete CAD-CAM-Programmierung und eine spätere Implementierung der Fertigungsprogramme mittels eines Postprozessors auf ein Mehrachsbearbeitungszentrum zu vereinfachen, verläuft eine Achse 39 der Trägerspindel 16 in mit dem Werkzeugträger 15 verbundenem Betriebszustand zwischen den Wälzbereichen 21 und 22 durch einen bei einem Abstand zwischen den Wälzbereichen 21 und 22 gleich Null vorliegenden Berührungspunkt zwischen den Wälzbereichen 21 und 22 hindurch. Damit sind die Achse bzw. die Spindelträgerachse 29 und eine Achse durch den Berührungspunkt zwischen den Wälzbereichen 21 und 22 deckungsgleich, womit die Programmierung des Walzverfahrens wesentlich vereinfacht wird.

Mittels des Walzwerkzeuges 14 sind integralbeschaufelte Scheiben und Rotoren von Strahltriebwerken mit geringen Kosten festwalzbar. Durch den schnellen und einfachen Austausch der Adapterelemente 37 und 38 ist das Walzwerkzeug 14 mit geringen Rüstzeiten für verschieden geometrisch ausgeführte Rotorbereiche einsetzbar, wobei neben unterschiedlichen Eingriffstiefen zwischen Schaufelelementen auch unterschiedliche Bearbeitungskräfte während des Walzprozesses an verschieden ausgeführten Bauteilen mit hoher Sicherheit und Prozessfähigkeit darstellbar sind.

Mittels der Zangenausführung des Walzwerkzeuges 14 ist eine Behandlung von Schaufelelementen bzw. von Aerofoils von einstückigen Rotorbereichen von Tip bis Fillet möglich, wobei ein gleichzeitiges Festwalzen der Druck- und Saugseiten von Schaufelelementen zur Vermeidung eines bearbeitungsbedingten Verzuges vorgesehen ist.

Zusätzlich ist mittels verschiedener Einzelwerkzeuge die Bearbeitung der Fillets bzw. der Übergangsbereiche zwischen der Oberfläche der Schaufelelemente und der Oberfläche des Grundkörpers zwischen den Schaufelelementen auf der Saug- und auf der Druckseite in gewünschtem Umfang durchführbar. Des Weiteren ist die Oberfläche des Grundkörpers zwischen den Schaufelelementen bzw. der Annulus mittels eines Einzelwerkzeuges festwalzbar.

Eine Beschädigung der zu bearbeitenden Schaufelelemente 11 und auch des Walzwerkzeuges 14 selbst kann bei der gezeigten Ausführung durch das Vorsehen einer Abstandshalteeinrichtung 40 vermieden werden, mittels welcher ein minimaler Abstand zwischen den Wälzbereichen 21 und 22 mechanisch festlegbar ist.

Die Abstandshalteeinrichtung 40 weist hier zwei Halteelemente 41 und 42 auf, von denen ein Halteelement 41 in einem dem Zangenkörper 17 zugewandten Bereich der Antriebseinrichtung 20 fest mit der Antriebseinrichtung 20 und ein Halteelement 42 in einem der Zangenkörper 18 zugewandten Bereich der Antriebseinrichtung 20 fest mit der Antriebseinrichtung 20 verbunden ist. Jedes Halteelement 41 und 42 weist vorliegend eine Bohrung auf, durch welche eine Stange 43 der Abstandshalteeinrichtung 40 geführt ist.

Die Stange 43 ist einenends fest, d. h. in axialer Richtung der Stange 43 unbeweglich, mit dem Halteelement 42 verbunden, wobei die Stange 43 hierzu beispielsweise in ein Gewinde des Halteelements 42 eingeschraubt und mit einer Madenschraube 46 in axialer Richtung der Stange 43 arretiert ist. Andernends ist die Stange 43 durch die Bohrung des Halteelements 41 geführt, welche die Stange 43 führt. Auf einer dem Halteelement 42 abgewandten Seite des Halteelements 41 ist die Stange 43 mit einem Gewinde 44 versehen, auf welchem eine Einstellschraube 45 angeordnet ist, welche beispielsweise mittels einer Kontermutter in einer exakten Position festlegbar ist. Die Einstellschraube 45 hat einen größeren Durchmesser als die Bohrung in dem Halteelement 41, so dass eine Bewegung der Zangenkörper 17 und 18 oberhalb des Drehpunkts 19 in zueinander entgegengesetzter Richtung begrenzt wird, wenn die Einstellschraube 45 bei einer Bewegung der Zangenkörper 17 und 18 durch die Antriebseinrichtung 20 mit dem Halteelement 41 in Kontakt tritt. Entsprechend wird durch die Abstandshalteeinrichtung 40 ein minimaler Abstand der Wälzbereiche 21 und 22 bzw. der Kugelelemente 33 und 34 zueinander vorgegeben. Hierdurch kann auf einfache Weise verhindert werden, dass die Kugelelemente 33 und 34 vor einer Einführung der Walzwerkzeugvorrichtung 14 in die Schaufelelemente 11 miteinander in Kontakt treten bzw. derart stark miteinander in Kontakt treten, dass sie beschädigt werden.

Andererseits kann über die Abstandshalteeinrichtung 40 verhindert werden, dass bei einer Einführung der Walzwerkzeugvorrichtung 14 in die zu bearbeitenden Schaufelelemente 11 eine auf eine Schaufelvorderkante wirkende Kraft die Schaufelvorderkante deformiert und in ungewünschtem Maße die mechanischen Eigenschaften der Schaufelvorderkante beeinflusst. Die Gefahr einer Deformierung der Schaufelvorderkante ist allein deshalb relativ groß, da sie sehr dünn ist und bereits durch geringe auf sie einwirkende Kräfte deformiert werden kann. Mittels der Abstandshalteeinrichtung 40 ist ein minimaler Abstand der Kugelelemente 33 und 34 beispielsweise derart wählbar, dass ein Bereich der Schaufelvorderkanten der Schaufelelemente 11 bei einem Festwalzvorgang unbearbeitet bleibt.

Die Einstellschraube 45 kann in verschiedenen Positionen des Gewindes 44 der Stange 43 festgelegt werden, so dass je nach zu bearbeitenden Schaufelelementen 11 ein minimaler Abstand der Kugelelemente 33 und 34 dem jeweiligen Anwendungsfall angepasst werden kann.

Die Abstandshalteeinrichtung 40 weist hier einen großen Abstand zu dem Drehpunkt 19 auf, so dass eine vorteilhafterweise genaue Einstellung des minimalen Abstands der Kugelelemente 33 und 34 vorgenommen werden kann.

Grundsätzlich ist das Walzwerkzeug 14 in jedes bekannte Bearbeitungszentrum integrierbar. Im Unterschied zu einer Nachverfestigung mittels Kugelstrahlen sind keine teuren Anlagen zu beschaffen. Die Nachverfestigung kann mittels des Walzwerkzeuges 14 beispielsweise in gängigen Fräszentren durchgeführt werden. Die Fräszentren werden mit dem Walzwerkzeug 14 bestückt und die Oberflächen von einstückigen Rotorbereichen werden analog zum Fräsen mit dem Festwalzwerkzeug 14 im Bereich ihrer Oberfläche bearbeitet.

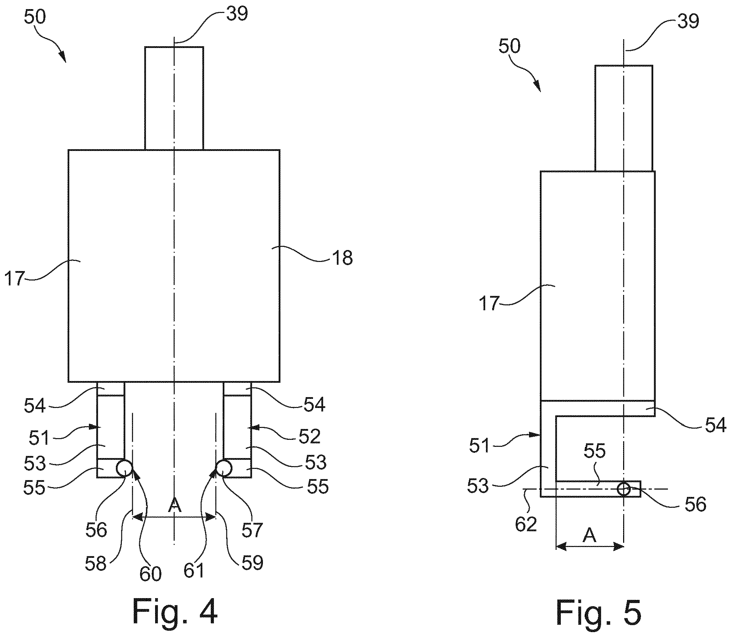

In Fig. 4 und Fig. 5 ist eine stark vereinfachte, alternativ ausgebildete Walzwerkzeugvorrichtung 50 gezeigt, welche hinsichtlich der nicht näher beschriebenen Elemente im Wesentlichen baugleich zu der Walzwerkzeugvorrichtung 14 ausgebildet ist.

Die Walzwerkzeugvorrichtung 50 weist alternativ ausgebildete Adapterelemente 51 auf, welche in der gegenüber der Fig. 4 um 90° gedrehten Ansicht der Fig. 5 jeweils einen hier im Wesentlichen U-förmigen Querschnitt mit einem ersten Teil 54, einem zweiten Teil 55 und einem dritten Teil 53 aufweist. Die ersten Teile 54 erstreckt sich im Wesentlichen in Richtung der Drehachse 27 und dienen zur Anordnung der Adapterelemente 51 und 52 an den in der Fig. 4 und der Fig. 5 nur stark vereinfacht gezeigten Zangenkörpern 17 und 18. Die zweiten Teile 55 sind im Wesentlichen parallel zu den ersten Teilen 54, aber in einer den Zangenkörpern 17 und 18 abgewandten Richtung zu den ersten Teilen 54 versetzt angeordnet. An den zweiten Teilen 55 der Adapterelemente 51 und 52 sind Kugelelemente 56 und 57 der Walzwerkzeugvorrichtung 50 angeordnet, wobei diese hinsichtlich ihrer Position bezüglich der Achse 39 vergleichbar zu den Kugelelementen 33 und 34 der Walzwerkzeugvorrichtung 14 angeordnet sind, d. h. auf der Achse 39 liegen.

Sowohl die ersten Teile 54 als auch die zweiten Teile 55 verlaufen bei der gezeigten Ausführung vorzugsweise in Richtung einer einer Einführung der Walzwerkzeugvorrichtung 50 in die Schaufelelemente 11 entsprechenden Richtung, welche im Wesentlichen auch einer Achsrichtung des Rotorbereichs 9 entspricht.

Die ersten Teile 54 und die zweiten Teile 55 der Adapterelemente 51 und 52 sind von den dritten Teilen 53 verbunden, wobei diese hier - in der Ansicht gemäß Fig. 5 - im Wesentlichen parallel zu der Achse 39 verlaufen, zu dieser versetzt und vollständig außerhalb der Achse 39 angeordnet sind. Vorliegend sind die Teile 55 im Wesentlichen stabförmig mit einer einer Mittelachse der Teile 55 entsprechenden Hauptachse 62 ausgebildet, welche hier parallel zu der Drehachse 27 verläuft. Die dritten Teile 53 sind gegenüber Achsen 58 und 59, die durch einen jeweiligen Bearbeitungspunkt 60 und 61 der Kugelelemente 56 und 57 parallel zu der Achse 39 verlaufen beabstandet.

Es können vielfältige Ausführungen der Adapterelemente 51 und 52 vorgesehen sein, bei denen ein Bereich der Adapterelemente 51 und 52 zur Achse 39 versetzt angeordnet ist. Beispielsweise können die Adapterelemente einen bogenförmigen oder halbkreisförmigen Bereich aufweisen, wobei die jeweilige Form der Adapterelemente 51 und 52 derart gewählt ist, dass insbesondere ein axialer Eingriff in Schaufelelemente 11 zur Bearbeitung von Schaufelvorderkanten und Schaufelhinterkanten vorzugsweise bei mehrstufig ausgebildeten Rotoren in Bliskbauweise in gewünschtem Umfang möglich ist. Ein Eingriff in mit herkömmlich geformten Adapterelementen schwer zugänglichen Bereichen von Schaufelelementen 11 wird mit der Walzwerkzeugvorrichtung 50 mit den Adapterelementen 51 und 52 stark vereinfacht oder erst ermöglicht, da insbesondere die dritten Teile 53 der Adapterelemente 51 und 52 durch ihre Anordnung eine axiale Einführung der Walzwerkzeugvorrichtung 50 in die Schaufelelemente 11 nicht behindern. Je größer ein Abstand A der dritten Teile 53 der Adapterelemente 51 und 52 zu der Achse 39 ausgebildet ist, desto tiefere Eingriffe in die Schaufelelemente 11 können bei einer Einführung der Walzwerkzeugvorrichtung 50 in axialer Richtung des Rotorbereichs 9 erzielt werden.

### Bezugszeichenliste

- 1: Strahltriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9: einstückiger Rotorbereich
- 10: ringförmiger Grundkörper
- 11: Schaufelelement
- 12: Übergangsbereich
- 13: Oberfläche des Grundkörpers
- 14: Walzwerkzeug
- 15: Werkzeugträger
- 16: Trägerspindel
- 17, 18: Zangenkörper
- 19: Drehlager
- 20: Antriebseinrichtung
- 21, 22: Wälzbereich
- 23: Kolbenelement
- 24: Zylinderelement
- 25: Ende des Zangenkörpers 17
- 26: Ende des Zangenkörpers 18
- 27: Drehachse
- 28, 29: Kolbenelement
- 30, 31: Federelement
- 32: Rückstelleinrichtung
- 33, 34: Kugelelement
- 35, 36: Haltebereich
- 37, 38: Adapterelement
- 39: Achse
- 40: Abstandshalteeinrichtung
- 41, 42: Halteelement
- 43: Stange
- 44: Gewinde
- 45: Einstellschraube
- 46: Madenschraube
- 50: Walzwerkzeugvorrichtung
- 51, 52: Adapterelement
- 53: dritter Teil der Adapterelemente
- 54: erster Teil der Adapterelemente
- 55: zweiter Teil der Adapterelemente
- 56, 57: Kugelelement
- 58, 59: Achse
- 60, 61: Bearbeitungspunkt
- 62: Hauptachse des zweiten Teils
- A: Abstand

## Patentansprüche

1. Walzwerkzeugvorrichtung (14, 50) zum Festwalzen von insbesondere Schaufelelementen (11) eines Rotorbereiches (9) eines Strahltriebwerkes (1) mit einem Werkzeugträger (15), mit dem zwei Zangenkörper (17, 18) drehbar verbunden sind, wobei die Zangenkörper (17, 18) jeweils mit einem Wälzbereich (21, 22) ausgeführt sind, und wobei ein Abstand zwischen den Wälzbereichen (21, 22) in Abhängigkeit einer Drehbewegung der Zangenkörper (17, 18) variierbar ist, **dadurch gekennzeichnet, dass** eine separate Abstandshalteeinrichtung (40) vorgesehen ist, mittels welcher ein minimaler Abstand der Wälzbereiche (21, 22) zueinander festlegbar ist.

2. Walzwerkzeugvorrichtung nach Anspruch 1,
**dadurch gekennzeichnet,**
**dass** die Abstandshalteeinrichtung (40) einenends fest mit einem Zangenkörper (17 bzw. 18) oder einer zur Bewegung der Zangenkörper (17, 18) vorgesehenen Antriebseinrichtung (20) und anderenends über einen Anschlag lose mit dem anderen Zangenkörper (18 bzw. 17) oder der Antriebseinrichtung (20) verbunden ist.

3. Walzwerkzeugvorrichtung nach Anspruch 2,
**dadurch gekennzeichnet,**
**dass** die Abstandshalteeinrichtung (40) mit einer Stange (43) ausgebildet ist, welche zur Bildung des Anschlags durch ein fest mit dem Zangenkörper (18 bzw. 17) oder der Antriebseinrichtung (20) verbundenes Halteelement (41), beispielsweise durch eine Bohrung des Halteelements (41), geführt ist und ein Anschlagelement (45) aufweist, welches einen minimalen Abstand der Wälzbereiche (21, 22) durch ein Zusammenwirken mit dem Halteelement (41) bildet.

4. Walzwerkzeugvorrichtung nach einem der Ansprüche 1 bis 3,
**dadurch gekennzeichnet,**
**dass** der minimale Abstand der Wälzbereiche (21, 22) mit der Abstandshalteeinrichtung (40) variierbar ist.

5. Walzwerkzeugvorrichtung nach Anspruch 4,
**dadurch gekennzeichnet,**
**dass** der minimale Abstand der Wälzbereiche (21, 22) mechanisch, hydraulisch, pneumatisch, elektrisch, magnetisch, thermisch oder chemisch einstellbar ist.

6. Walzwerkzeugvorrichtung nach einem der Ansprüche 4 oder 5,
**dadurch gekennzeichnet,**
**dass** der minimale Abstand der Wälzbereiche (21, 22) mittels einer Stellschraube (45) der Abstandshalteeinrichtung (40) variierbar ist.

7. Walzwerkzeugvorrichtung nach einem der Ansprüche 1 bis 6,
**dadurch gekennzeichnet,**
**dass** die Abstandshalteeinrichtung (40) auf einer den Wälzbereichen (21, 22) abgewandten oder zugewandten Seite eines gemeinsamen Drehlagers (19) der Zangenkörper (17, 18) gegenüber dem Werkzeugträger (15) angeordnet ist.

8. Walzwerkzeugvorrichtung nach einem der Ansprüche 1 bis 7,
**dadurch gekennzeichnet,**
**dass** der Werkzeugträger (15) mit einer Trägerspindel (16) verbindbar ist, wobei eine Achse (39) der Trägerspindel (16) in mit dem Werkzeugträger (15) verbundenem Zustand zwischen den Wälzbereichen (21, 22) durch einen bei einem Abstand zwischen den Wälzbereichen (21, 22) gleich Null vorliegenden Berührungspunkt zwischen den Wälzbereichen (21, 22) hindurch verläuft.

9. Walzwerkzeugvorrichtung nach einem der Ansprüche 1 bis 8,
**dadurch gekennzeichnet, dass** die Zangenkörper (17, 18) über eine Antriebseinrichtung (20) miteinander gekoppelt sind und der Abstand zwischen den Wälzbereichen (21, 22) in Abhängigkeit einer antriebseinrichtungsseitigen Drehbewegung der Zangenkörper (17, 18) zueinander reduzierbar ist.

10. Walzwerkzeugvorrichtung nach Anspruch 9, **dadurch gekennzeichnet, dass** die Antriebseinrichtung (20) eine einfachwirkende Kolben-Zylinder-Einheit ist.

11. Walzwerkzeugvorrichtung nach einem der Ansprüche 9 oder 10, **dadurch gekennzeichnet, dass** die Antriebseinrichtung (20), insbesondere ein Kolbenelement (23) der Antriebseinrichtung (20), austauschbar ist.

12. Walzwerkzeugvorrichtung nach einem der Ansprüche 1 bis 11, **dadurch gekennzeichnet, dass** die Wälzbereiche (21, 22) mit den Zangenkörpern (17, 18) über Adapterelemente (37, 38, 51, 52) verbindbar sind.

13. Walzwerkzeugvorrichtung nach Anspruch 12, **dadurch gekennzeichnet, dass** die Adapterelemente (37, 38, 51, 52) austauschbar mit den Zangenkörpern (17, 18) verbindbar sind.

14. Walzwerkzeugvorrichtung nach einem der Ansprüche 1 bis 13, **dadurch gekennzeichnet, dass** die Zangenkörper (17, 18) im Bereich der Wälzbereiche (21, 22) jeweils mit einem Teil (54) ausgebildet sind, wobei Hauptachsen (62) der Teile (54) eine Erstreckungskomponente in Richtung einer Drehachse (27) des Drehlagers (19) aufweisen.

15. Walzwerkzeugvorrichtung nach einem der Ansprüche 1 bis 14, **dadurch gekennzeichnet, dass** die Wälzbereiche (21, 22) jeweils ein insbesondere austauschbares Kugelelement (33, 34, 56, 57) umfassen.

## Claims

1. Rolling tool device (14, 50) for deep-rolling of, in particular, blade elements (11) of a rotor area (9) of a jet engine (1) with a tool carrier (15) to which two pliers-type bodies (17, 18) are rotatably connected, with the pliers-type bodies (17, 18) each being provided with a rolling area (21, 22), and with a distance between the rolling areas (21, 22) being variable in dependence of a rotary movement of the pliers-type bodies (17, 18), **characterized in that** a separate spacer device (40) is provided by means of which a minimum distance between the rolling areas (21, 22) can be defined.

2. Rolling tool device in accordance with Claim 1, **characterized in that** the spacer device (40) is at one end firmly connected to a pliers-type body (17 or 18) or to a driving unit (20) provided for moving the pliers-type bodies (17, 18) and at the other end is loosely connected by a stop to the other pliers-type body (18 or 17) or to the driving unit (20).

3. Rolling tool device in accordance with Claim 2, **characterized in that** the spacer device (40) is designed with a rod (43) which, to form the stop is passed through a holding element (41) firmly connected to the pliers-type body (18 or 17) or to the driving unit (20), for example through a hole in the holding element (41), and has a stop element (45) which creates a minimum distance of the rolling areas (21, 22) due to interaction with the holding element (41).

4. Rolling tool device in accordance with one of the Claims 1 to 3, **characterized in that** the minimum distance of the rolling areas (21, 22) is variable using the spacer device (40).

5. Rolling tool device in accordance with Claim 4, **characterized in that** the minimum distance of the rolling areas (21, 22) can be set mechanically, hydraulically, pneumatically, electrically, magnetically, thermically or chemically.

6. Rolling tool device in accordance with one of the Claims 4 or 5, **characterized in that** the minimum distance of the rolling areas (21, 22) is variable by means of a setting screw (45) of the spacer device (40).

7. Rolling tool device in accordance with one of the Claims 1 to 6, **characterized in that** the spacer device (40) is arranged relative to the tool carrier (15) on a side of a joint pivot bearing (19) of the pliers-type bodies (17, 18) facing away from or towards the rolling areas (21, 22).

8. Rolling tool device in accordance with one of the Claims 1 to 7, **characterized in that** the tool carrier (15) is connectable to a carrier spindle (16), where an axis (39) of the carrier spindle (16) in a state connected to the tool carrier (15) passes between the rolling areas (21, 22) through a contact point present at a distance between the rolling areas (21, 22) equal to zero.

9. Rolling tool device in accordance with one of the Claims 1 to 8, **characterized in that** the pliers-type bodies (17, 18) are coupled to each other via a driving unit (20) and the distance between the rolling areas (21, 22) is reducible in dependence of a driving unit-side rotary movement of the pliers-type bodies (17, 18) relative to each other.

10. Rolling tool device in accordance with Claim 9, **characterized in that** the driving unit (20) is provided as a single-acting piston-cylinder unit.

11. Rolling tool device in accordance with one of the Claims 9 or 10, **characterized in that** the driving unit (20), in particular a piston element (23) of the driving unit (20) is interchangeable.

12. Rolling tool device in accordance with one of the Claims 1 to 11, **characterized in that** the rolling areas (21, 22) are connectable to the pliers-type bodies (17, 18) via adapter elements (37, 38, 51, 52).

13. Rolling tool device in accordance with Claim 12, **characterized in that** the adapter elements (37, 38, 51, 52) are interchangeably connectable to the pliers-type bodies (17, 18).

14. Rolling tool device in accordance with one of the Claims 1 to 13, **characterized in that** the pliers-type bodies (17, 18) in the zone of the rolling areas (21, 22) are each designed with one part (54), where main axes (62) of the parts (54) have an extension component in the direction of a rotary axis (27) of the pivot bearing (19).

15. Rolling tool device in accordance with one of the Claims 1 to 14, **characterized in that** the rolling areas (21, 22) each include a ball element (33, 34, 56, 57) that is exchangeable in particular.

## Revendications

1. Dispositif de laminage (14, 50) pour le galetage de renforcement notamment d'éléments d'aubes (11) d'une zone de rotor (9) d'un réacteur (1) avec un porte-outil (15) auquel deux corps de pince (17, 18) sont reliés de manière rotative, sachant que les corps de pince (17, 18) sont conçus chacun avec une zone de laminage (21, 22) et sachant qu'un écart entre les zones de laminage (21, 22) est variable en fonction d'un mouvement rotatif des corps de pince (17, 18), **caractérisé en ce qu'**est prévu un dispositif séparé d'écartement (40) au moyen duquel un écart minimal des zones de laminage (21, 22) entre elles est déterminable.

2. Dispositif de laminage selon la revendication n° 1, **caractérisé en ce que** le dispositif d'écartement (40) est, d'un côté, relié de manière fixe à un corps de pince (17 ou 18) ou à un dispositif d'entraînement (20) prévu pour le mouvement des corps de pince (17, 18) et est relié de manière lâche, de l'autre côté, à l'autre corps de pince (18 ou 17) ou au dispositif d'entraînement (20) par le biais d'une butée.

3. Dispositif de laminage selon la revendication n° 2, **caractérisé en ce que** le dispositif d'écartement (40) est conçu avec une tige (43) qui, pour former la butée, est guidée à travers un élément de support (41) relié de manière fixe au corps de pince (18 ou 17) ou au dispositif d'entraînement (20), par exemple à travers un perçage de l'élément de support (41), et présente un élément de butée (45) qui forme un écart minimal des zones de laminage (21, 22) par une interaction avec l'élément de support (41).

4. Dispositif de laminage selon une des revendications n° 1 à n° 3, **caractérisé en ce que** l'écart minimal des zones de laminage (21, 22) est variable moyennant le dispositif d'écartement (40).

5. Dispositif de laminage selon la revendication n° 4, **caractérisé en ce que** l'écart minimal des zones de laminage (21, 22) est réglable mécaniquement, hydrauliquement, pneumatiquement, électriquement, magnétiquement, thermiquement ou chimiquement.

6. Dispositif de laminage selon une des revendications n° 4 ou n° 5, **caractérisé en ce que** l'écart minimal des zones de laminage (21, 22) est variable au moyen d'une vis de réglage (45) du dispositif d'écartement (40).

7. Dispositif de laminage selon une des revendications n° 1 à n° 6, **caractérisé en ce que** le dispositif d'écartement (40) est disposé sur un côté opposé aux zones de laminage (21, 22) ou tourné vers celles-ci, d'un palier rotatif (19) commun aux corps de pince (17, 18), par rapport au porte-outil (15).

8. Dispositif de laminage selon une des revendications n° 1 à n° 7, **caractérisé en ce que** le porte-outil (15) est reliable à une broche de support (16), sachant qu'un axe (39) de la broche de support (16) à l'état relié au porte-outil (15) s'étend entre les zones de laminage (21, 22) à travers un point de contact qui existe lors d'un écart nul entre les zones de laminage (21, 22).

9. Dispositif de laminage selon une des revendications n° 1 à n° 8, **caractérisé en ce que** les corps de pince (17, 18) sont accouplés ensemble par un dispositif d'entraînement (20) et que l'écart entre les zones de laminage (21, 22) est réductible en fonction d'un mouvement rotatif côté dispositif d'entraînement des corps de pince (17, 18) l'un vers l'autre.

10. Dispositif de laminage selon la revendication n° 9, **caractérisé en ce que** le dispositif d'entraînement (20) est une unité piston-cylindre à simple effet.

11. Dispositif de laminage selon une des revendications n° 9 ou n° 10, **caractérisé en ce que** le dispositif d'entraînement (20), notamment un élément à piston (23) du dispositif d'entraînement (20), est remplaçable.

12. Dispositif de laminage selon une des revendications n° 1 à n° 11, **caractérisé en ce que** les zones de laminage (21, 22) sont reliables aux corps de pince (17, 18) par le biais des éléments adaptateurs (37, 38, 51, 52).

13. Dispositif de laminage selon la revendication n° 12, **caractérisé en ce que** les éléments adaptateurs (37, 38, 51, 52) sont reliables aux corps de pince (17, 18) de manière à être remplaçables.

14. Dispositif de laminage selon une des revendications n° 1 à n° 13, **caractérisé en ce que** les corps de pince (17, 18) au niveau des zones de laminage (21, 22) sont conçus chacun avec une pièce (54), sachant que les axes principaux (62) des pièces (54) présentent une composante d'extension en direction d'un axe rotatif (27) du palier rotatif (19).

15. Dispositif de laminage selon une des revendications n° 1 à n° 14, **caractérisé en ce que** les zones de laminage (21, 22) comprennent chacune un élément à bille (33, 34, 56, 57), en particulier remplaçable.
